# EUROPÄISCHE PATENTSCHRIFT

(11) **EP 2 214 239 B1**
(45) Veröffentlichungstag und Bekanntmachung des Hinweises auf die Patenterteilung: **11.11.2015**
(21) Anmeldenummer: 09007074.9
(22) Anmeldetag: 27.05.2009
(51) Int. Cl.: H01M 8/00, H01M 8/04, H01M 8/06

(54) **Vorrichtung und Verfahren zur Prozesswasserversorgung für ein Reformer-Brennstoffzellen-System**
Device and method for supplying process water for a reformer fuel cell system
Dispositif et procédé destinés à l'alimentation en eau de processus pour un système de cellules de combustible de réformateur

(30) Priorität: 19.01.2009 EP 09000671
(43) Veröffentlichungstag der Anmeldung: 04.08.2010
(73) Patentinhaber: Truma Gerätetechnik GmbH & Co. KG, 85640 Putzbrunn (DE)
(72) Erfinder: Schiegl, Andreas, 82041 Oberhaching (DE); Frank, Reinhard, 80331 München (DE); Hartmann, Thomas, 82205 Gilching (DE); Schütz, Thomas, 82396 Pähl (DE)
(74) Vertreter: Müller Hoffmann & Partner

(56) Entgegenhaltungen:
- DE-A1-102006 002 882
- US-A- 5 335 628
- US-A1- 2004 038 089

## Beschreibung

Die Erfindung betrifft eine Vorrichtung und ein Verfahren für eine Prozesswasserversorgung für ein Reformer-Brennstoffzellen-System insbesondere zum Einsatz in Freizeitfahrzeugen und Yachten bzw. Booten.

Reformer-Brennstoffzellen-Systeme weisen üblicherweise einen Reformer zum Umwandeln eines kohlenwasserstoffhaltigen Fluids (flüssiger oder gasförmiger Brennstoff) in ein wasserstoffhaltiges Gas sowie wenigstens eine Brennstoffzelle zum Umwandeln des in dem wasserstoffhaltigen Gas enthaltenen Wasserstoffs zusammen mit Sauerstoff in Strom, Wärme und einen Wasser enthaltenden Fluidstrom auf.

Für die Umwandlung von flüssigen und gasförmigen Kohlenwasserstoffen (einschließlich Alkoholen) in ein für den Betrieb von Brennstoffzellen geeignetes wasserstoffhaltiges Gas sind verschiedene Reformierungsverfahren bekannt. Dazu zählen Dampfreformierung, autotherme Reformierung oder partielle Oxidation bzw. Kombinationen davon. Als Brennstoff finden in der Regel bei diesen Reformersystemen Diesel, Kerosin, JP-8, Erdgas (Methan), Propan oder Butan sowie als Alkohole Methanol oder Ethanol Verwendung. Speziell bei der Dampfreformierung und autothermen Reformierung wird für die Umwandlung der Kohlenwasserstoffe bzw. Alkohole und gegebenenfalls nachfolgende Gasreinigungsstufen (Hoch- und Niedertemperaturshift) zusätzlich Wasser (Prozesswasser) benötigt. Die Zudosierung des Wassers wird nach dem so genannten S/C-Verhältnis (Steam-to-Carbon-Ratio), d.h., dem Verhältnis von Wasserdampf zu Kohlenstoff, geregelt. Üblicherweise liegt das S/C-Verhältnis zwischen 1,5 und 5,0, je nach Art des Reformierungsverfahrens.

Um Schädigungen und/oder Ablagerungen im Reformersystem zu vermeiden, muss das verwendete Wasser weitgehend frei von Verunreinigungen sein. Gleiches gilt auch für Wasser, das zur anoden- und/oder kathodenseitigen Befeuchtung der Prozessgase (Wasserstoff bzw. Reformatgas, Sauerstoff bzw. Luft) von Brennstoffzellen, insbesondere bei Niedertemperatur-PEM-Brennstoffzellen, Verwendung findet.

Als Richtlinie für die Prozesswasserqualität bei Reformersystemen und Brennstoffzellen können die Vorgaben der technischen Regeln für Dampferzeuger der Gruppe IV (TRD 611) dienen, in denen für den Betrieb von Durchlaufkesseln salzfreies Wasser vorgeschrieben wird. Salzfreies bzw. so genanntes vollentsalztes Wasser ist demnach Wasser mit einem Elektrolytgehalt entsprechend einer Leitfähigkeit von weniger als 0,2 µS/cm und einer Kieselsäurekonzentration von < 0,02 mg/l. Generell gilt, dass der Gehalt an ausfällbaren und löslichen Bestandteilen in Wasser möglichst gering gehalten werden muss, um einen störungsfreien Betrieb des Reformer-Brennstoffzellen-Systems gewährleisten zu können.

Grundsätzlich entsteht beim Betrieb von Brennstoffzellen als Reaktionsprodukt Wasser, das mit dem Anodenabgas und der Kathodenabluft aus der Brennstoffzelle ausgetragen wird. Dieses Wasser kann als Prozesswasser wieder dem Reformer und/oder der Brennstoffzelle zugeführt werden.

Als weitere Wasserquellen kommen speziell in einem Reformer-Brennstoffzellen-System auch das im Abgas von Start- und/oder Regelbrennern enthaltene Wasser in Frage. Diese Brenner werden mit gasförmigen oder flüssigen Kohlenwasserstoffen betrieben und dienen zum Vorheizen von Reformer und Brennstoffzelle während der Startphase, zum Aufrechterhalten einer bestimmten Betriebstemperatur oder auch zum Bereitstellen der erforderlichen Prozesswärme.

Zur Rückgewinnung des Wassers aus den Abgas- bzw. Abluftströmen sind dem Fachmann verschiedene Varianten von Kondensatoren und entsprechende Anordnungen derselben bekannt.

Ziel der Wasserrückgewinnung, z.B. mit Hilfe der Kondensatoren, ist es, den Wasserbedarf eines Reformer-Brennstoffzellen-Systems vollständig zu decken, so dass dem System lediglich der Brennstoff sowie Umgebungsluft zugeführt werden muss. Hierfür sind je nach Ausführungsart der Kondensatoren, der Nutzung der zur Verfügung stehenden Kondensatquellen sowie des verwendeten Reformierungsverfahrens Kondensationstemperaturen zwischen 40 und 60°C erforderlich. Vor allem bei hohen Umgebungs- bzw. Außentemperaturen kann es sein, dass der erzielbare Temperaturgradient zwischen dem zu kondensierenden Medium und dem Kühlmedium (vorrangig Umgebungsluft) zu gering wird, um eine vollständige Rückkondensation der für den ordnungsgemäßen Betrieb des Reformer-Brennstoffzellen-Systems erforderlichen Prozesswassermenge sicherzustellen. Das Reformer-Brennstoffzellen-System muss dann entweder in einem der geringeren zur Verfügung stehenden Prozesswassermenge angepassten Teillastmodus gefahren oder komplett abgeschaltet werden, um Schädigungen des Reformers (beispielsweise durch Verkokung der Katalysatoren) bei zu niedrigen S/C-Werten oder eine Austrocknung der Brennstoffzelle zu vermeiden.

Die beschriebenen Kondensatorenlösungen erfordern darüber hinaus einen hohen apparativen und regelungstechnischen Aufwand (durch die Kondensatoren, zusätzliche Kühllüfter etc.).

Der Erfindung liegt die Aufgabe zugrunde, eine einfache und kostengünstige Wasserversorgung für Reformer-Brennstoffzellen-Systeme anzugeben, insbesondere für derartige Systeme, die in Freizeitmobilen als Bordstromversorgungssystem (Auxillary Power Unit) eingesetzt werden.

Als Freizeitmobile werden in diesem Zusammenhang Freizeitfahrzeuge wie Reisemobile oder Caravans, aber auch Boote und Yachten verstanden.

Aus der US 2004/0038089 A1 ist ein Verfahren zum Aufbreiten und Verteilen von Wasser bekannt, das an Bord eines Flugzeugs generiert wird. Dazu wird Wasser aus den Abgasen einer Brennstoffzelle und einer Turbine gewonnen, gereinigt und für sanitäre Einrichtungen sowie als Trinkwasser und zur Luftbefeuchtung in Klimaanlagen zur Verfügung gestellt.

Die Aufgabe wird erfindungsgemäß durch ein Freizeitmobil mit einem Prozesswasserversorgungssystem mit den Merkmalen von Anspruch 1 und ein Verfahren gemäß Anspruch 14 gelöst. Vorteilhafte Ausgestaltungen sind in den abhängigen Ansprüchen angegeben.

Ein Prozesswasserversorgungssystem für ein Reformer-Brennstoffzellen-System weist einen Frischwasservorrat zum Bevorraten von als Prozesswasser für das Reformer-Brennstoffzellen-System dienendem Frischwasser sowie eine Zuführeinrichtung zum Zuführen des Prozesswassers zu dem Reformer-Brennstoffzellen-System auf.

Während es bisher bekannt war, das Prozesswasser ausschließlich durch die Rückkondensation von Wasser aus den Abgas- bzw. Abluftströmen zu gewinnen, wird erfindungsgemäß ein Frischwasservorrat bereitgestellt, in dem Frischwasser, also kein durch Kondensation aus einem vorherigen Reformer- oder Brennstoffzellenprozess gewonnenes Wasser gelagert wird. Der Frischwasservorrat stellt daher eine Art Vorratstank dar, aus dem je nach Bedarf Prozesswasser entnommen und dem Reformer-Brennstoffzellen-System zugeführt werden kann.

Die Zuführeinrichtung kann mit einem Reformer- und/oder einer Brennstoffzelle des Reformer-Brennstoffzellen-Systems verbunden sein, um das Prozesswasser zu dem Reformer bzw. der Brennstoffzelle zuzuführen. Als Brennstoffzelle können in diesem Zusammenhang eine einzelne oder auch mehrere, üblicherweise zu einem Stapel (Stack) zusammengefasste Einzelbrennstoffzellen verstanden werden.

Bei einer Ausführungsform zur Nutzung bei einem Reformer-Brennstoffzellen-System in einem Freizeitmobil ist ein Wassertank vorgesehen, der in üblicher Weise als Wassertank des Freizeitmobils dient. Der Frischwasservorrat ist erfindungsgemäß in dem Wassertank gelagert, wobei der Wassertank mit der Zuführeinrichtung zum Zuführen des Prozesswassers sowie mit üblicherweise vorhandenen Sanitärinstallationen in dem Freizeitmobil verbunden ist, derart, dass das in dem Wassertank gelagerte Wasser sowohl als Prozesswasser als auch als Frisch- und Brauchwasser für die Sanitärinstallationen nutzbar ist.

Freizeitmobile verfügen in der Regel über Wassertanks für Frisch- und Brauchwasser. Diese Wassertanks lagern Wasser für den täglichen Gebrauch, unter anderem für die Versorgung von Duschen, Toiletten sowie Spül- und Waschbecken. Die hier beschriebene Variante geht davon aus, dass der in dem Freizeitmobil ohnehin vorhandene Wassertank gleichzeitig zum Lagern des Frischwasservorrats für das in dem Reformer-Brennstoffzellen-System verwendete Prozesswasser genutzt wird. Somit kann für eine teilweise bzw. vollständige Prozesswasserversorgung eines in einem Freizeitmobil installierten Reformer-Brennstoffzellen-Systems auf den Frischwasservorrat im Wassertank zurückgegriffen werden.

Bei einer Variante kann der Frischwasservorrat auch teilweise in einem Trinkwasser-Leitungssystem gelagert sein. Diese Anordnung eignet sich insbesondere für einen stationären Betrieb des Reformer-Brennstoffzellen-Systems, also wenn das Freizeitmobil z.B. auf einem Campingplatz geparkt ist. Bei dem stationären System kann beispielsweise auf vorhandene öffentliche Trinkwasser-Leitungssysteme zurückgegriffen werden, um das Frischwasser zur Nutzung als Prozesswasser bereitzustellen.

In der Zuführeinrichtung kann eine Pumpeinrichtung vorgesehen sein, zum Fördern des Wassers aus dem Frischwasservorrat zu dem Reformer-Brennstoffzellen-System. Ebenso können Füllstandssensoren in den jeweiligen Wasserreservoirs sowie Leitfähigkeitsmess-Sonden vorgesehen sein. Darüber hinaus ist eine Steuereinrichtung erforderlich, zum Steuern der Pumpeinrichtung und gegebenenfalls vorgesehener Ventile.

In der Zuführeinrichtung kann eine Wasseraufbereitungsvorrichtung vorgesehen sein. Die Wasseraufbereitungsvorrichtung dient dazu, die oben bereits beschriebene Wasserqualität bzw. -reinheit sicherzustellen und das Wasser aus dem Wassertank vor dem Einleiten in das Reformer-Brennstoffzellen-System durch eine entsprechende Wasseraufbereitung von schädlichen Verunreinigungen zu befreien. Die Aufbereitung kann in bekannter Weise durch Ionenaustauscherharze, Fein- und/oder Mikrofiltrationsverfahren, Umkehrosmoseverfahren oder durch Destillationsverfahren wie z.B. eine Membrandestillation oder eine Fallfilmverdampfung erfolgen. Gegebenenfalls kann - wie später noch beschrieben wird - das im Reformer-Brennstoffzellen-System geräteintern rückkondensierte Wasser über die Wasseraufbereitungsvorrichtung geleitet werden, um die Reinheit dieses Wassers zu verbessern.

Um ein Einfrieren des Prozesswassers bzw. der Wasseraufbereitungsvorrichtung selbst zu vermeiden, kann das Wasser bei geeigneter Ausgestaltung von Reformersystem, Wasseraufbereitungsvorrichtung, Leitungen, Wasserbehälter, Pumpen etc. mit Frostschutzmittel versehen werden. Dies ist insbesondere dann vorteilhaft, wenn das Freizeitmobil im Winter für längere Zeit in kalter Umgebung steht.

In der Zuführeinrichtung kann stromauf von der Pumpeinrichtung eine Rückstromsperre vorgesehen sein, um ein Rückströmen des Prozesswassers in den Frischwasservorrat zu vermeiden. Dies ist unter anderem auch wichtig, weil das Frischwasser in dem Freizeitmobil auch anderen Zwecken zugeführt werden kann.

Bei einer Ausführungsform kann eine Kondensationseinrichtung vorgesehen sein, zum Rückkondensieren von Wasser, das in wenigstens einem der das Reformer-Brennstoffzellen-System verlassenden Fluidströme enthalten ist. Die Kondensationseinrichtung kann mit dem Reformer und der Brennstoffzelle verbunden sein, zum Zuführen des rückkondensierten Wassers als Prozesswasser zu dem Reformer und/oder der Brennstoffzelle.

Der Aufbau einer derartigen Kondensationseinrichtung ist im Prinzip bekannt. Die Bereitstellung in dem hier beschriebenen Prozesswasserversorgungssystem ermöglicht es, dass das Prozesswasser nicht ausschließlich durch den Frischwasservorrat bereitgestellt werden muss, sondern dass nach wie vor auch die Abluft- und Abgasströme, die das Reformer-Brennstoffzellen-System verlassen und in der Regel Wasser mit sich führen, zur Wassergewinnung genutzt werden. Auf diese Weise kann die Kondensationseinrichtung die Prozesswasserversorgung entweder vollständig alleine oder auch in einem Mischbetrieb zusammen mit der Versorgung aus dem Frischwasservorrat übernehmen. Durch die Kopplung der Kondensationseinrichtung mit der Prozesswasserversorgung aus dem Frischwasservorrat ist es möglich, unter allen Betriebsbedingungen ausreichend Prozesswasser für die Versorgung des Reformer-Brennstoffzellen-Systems bereitzustellen.

Die Kondensationseinrichtung kann mit der Zuführeinrichtung verbunden sein, wobei dann die Wasseraufbereitungsvorrichtung stromab von der Kondensationseinrichtung vorgesehen sein kann. Dann ist es möglich, das von der Kondensationseinrichtung rückkondensierte Wasser durch die Wasseraufbereitungsvorrichtung aufbereiten zu lassen, bevor es wieder in das Reformer-Brennstoffzellen-System gelangt.

Wenigstens einer der folgenden Fluidströme kann zu der Kondensationseinrichtung zum Rückgewinnen von Prozesswasser geführt werden:
- Anodenabgas aus einem Anodenreaktionsraum der Brennstoffzelle;
- Kathodenabluft aus einem Kathodenreaktionsraum der Brennstoffzelle;
- Abgas von einem Brenner, der zum Erwärmen von Teilen des Reformer-Brennstoffzellen-Systems oder von Medienströmen zu dem Reformer-Brennstoffzellen-System dient;
- Abgas von einem Brenner, der zum Verwerten von Anoden-Offgas (Anodenabgas) dient.

Derartige Brenner (z.B. Start- oder Regelbrenner) werden häufig dazu benutzt, das Reformer-Brennstoffzellen-System vor der Inbetriebnahme zu erwärmen, im Betrieb eine bestimmte Betriebstemperatur aufrechtzuerhalten oder auch um die erforderliche Prozesswärme zur Verfügung zu stellen. Die Abgase derartiger Brenner enthalten in aller Regel auch Wasserdampf, aus dem mit Hilfe der Kondensationseinrichtung Wasser rückgewonnen werden kann.

Es kann eine Betriebsarten-Umschalteinrichtung vorgesehen sein, um ein Umschalten zwischen den folgenden drei Betriebsarten zu ermöglichen:
- Versorgen des Reformer-Brennstoffzellen-Systems mit Prozesswasser ausschließlich aus dem Frischwasservorrat (Frischwasserbetrieb);
- Versorgen des Reformer-Brennstoffzellen-Systems mit Prozesswasser ausschließlich von der Kondensationseinrichtung (Kondensationsbetrieb);
- Versorgen des Reformer-Brennstoffzellen-Systems mit Prozesswasser gleichzeitig sowohl aus dem Frischwasservorrat als auch von der Kondensationseinrichtung (Mischbetrieb).

In der beschriebenen ersten Betriebsart wird somit kein Wasser durch die Kondensationseinrichtung rückgewonnen. Das Prozesswasser wird vollständig aus dem Frischwasservorrat entnommen. Da bei Freizeitmobilen in der Regel ein großer Wassertank vorhanden ist (um z.B. den Betrieb einer Dusche zu ermöglichen), ist eine Bereitstellung des Prozesswassers einfach möglich.

Die zweite Betriebsart entspricht der im Stand der Technik üblichen Betriebsart, bei der Wasser ausschließlich durch Rückkondensation mit Hilfe der Kondensationseinrichtung gewonnen werden muss.

Die dritte Betriebsart entspricht einem Mischbetrieb, bei dem ein Teil des Prozesswassers durch die Kondensationseinrichtung rückgewonnen und der andere, für einen regulären Betrieb des Reformer-Brennstoffzellen-Systems notwendige Teil aus dem Frischwasservorrat je nach Bedarf zugeführt wird. Für diese Betriebsart kann es zweckmäßig sein, eine entsprechende Steuer- bzw. Regeleinrichtung vorzusehen, die die Zuführung von Prozesswasser aus dem Frischwasservorrat jeweils aktuell an die Wassermenge anpasst, die von der Kondensationseinrichtung bereitgestellt wird.

Das erfindungsgemäße Prozesswasserversorgungssystem ist demnach zumindests derart gestaltet, dass es in zwei der genannten Betriebsarten betrieben werden kann.

Dabei ist die Betriebsarten-Umschalteinrichtung derart ausgebildet, dass sie wenigstens zwischen zwei der drei genannten Betriebsarten umschalten kann.

So ist eine Ausführungsform vorgesehen, bei der das Reformer-Brennstoffzellen-System entweder mit Prozesswasser ausschließlich aus dem Frischwasservorrat (Frischwasserbetrieb) oder mit Prozesswasser gleichzeitig sowohl aus dem Frischwasservorrat als auch von der Kondensationseinrichtung (Mischbetrieb) versorgt wird, wobei zwischen diesen beiden Betriebsarten durch die Betriebsarten-Umschalteinrichtung gewechselt werden kann.

Bei einer anderen Ausführungsform erfolgt die Prozesswasserversorgung entweder ausschließlich aus dem Frischwasservorrat (Frischwasserbetrieb) oder ausschließlich von der Kondensationseinrichtung (Kondensationsbetrieb).

Wiederum bei einer anderen Ausführungsform kann die Prozesswasserversorgung ausschließlich von der Kondensationseinrichtung (Kondensationsbetrieb) oder im Mischbetrieb, also aus dem Frischwasservorrat und von der Kondensationseinrichtung erfolgen.

Schließlich ist auch die Variante möglich, bei der alle drei genannten Betriebsarten möglich sind und wahlweise eingestellt werden können. Diese letzte Variante bildet somit die technisch anspruchsvollste Lösung. Die vorher genannten Varianten sind demzufolge einfachere Ausführungsformen.

Das Umschalten mit Hilfe der Betriebsarten-Umschalteinrichtung kann manuell durch den Bediener erfolgen.

Alternativ oder ergänzend dazu kann ein Umschalten zwischen den Betriebsarten durch die Betriebsarten-Umschalteinrichtung auch automatisch in Abhängigkeit von wenigstens einem der folgenden Kriterien erfolgen:
- Über- oder Unterschreiten eines vorgegebenen Grenzwerts durch die Umgebungstemperatur: Ab einer gewissen Umgebungstemperatur des Freizeitfahrzeugs kann die Betriebsarten-Umschalteinrichtung bzw. die Steuerung des Reformer-Brennstoffzellen-Systems die Prozesswasserversorgung umschalten, z.B. von dem reinen Kondensationsbetrieb auf Mischbetrieb. Der Temperatur-Grenzwert steht in Relation zur erforderlichen Kondensationstemperatur bzw. dem erzielbaren Temperaturgradienten zwischen dem zu kondensierenden Medium und dem Kühlmedium.
- Über- oder Unterschreiten eines vorgegebenen Grenzwerts durch einen Füllstand in einem internen Puffer-Wassertank des Reformer-Brennstoffzellen-Systems: Bei einem Reformer-Brennstoffzellen-System wird bei Verwendung einer Kondensationseinrichtung üblicherweise stets ein interner Pufferspeicher (Puffer-Wassertank) zur Zwischenspeicherung von auskondensiertem Wasser vorhanden sein. Dieser Puffer-Wassertank besitzt ein definiertes Wasservolumen, welches mit Hilfe einer kontinuierlichen oder schrittweisen Füllstandsüberwachung (Zwei- oder Mehrpunktmessung) überwacht werden kann. Wenn der Füllstand unter einen gewissen Wert absinkt, bewirkt die Betriebsarten-Umschalteinrichtung ein Umschalten der Betriebsart, z.B. auf eine alleinige Versorgung aus dem Frischwasservorrat oder auf den Mischbetrieb.
- Über- oder Unterschreiten eines vorgegebenen Grenzwerts durch eine Durchflussmenge an Wasser, das dem Reformer und/oder der Brennstoffzelle des Reformer-Brennstoffzellen-Systems zugeführt wird: Die Wassermenge, die dem Reformer (z.B. Verdampfer) bzw. der Brennstoffzelle (z.B. zur Befeuchtung) für einen ordnungsgemäßen Betrieb zuzuführen ist, hängt von der Systemausgestaltung ab. Dieser Wert ist vorab bekannt und in der Steuerung hinterlegbar. Die Messung der Durchflussmenge kann z.B. in der Zuführeinrichtung, also z.B. in der Zuführungsleitung zum Reformersystem und/oder zur Brennstoffzelle erfolgen. Falls die Durchflussmenge unter den vorgegebenen Grenzwert (Sollwert einschließlich tolerierbarer Abweichung) sinkt, ist eine Umschaltung der Betriebsart, z.B. aus dem Kondensationsbetrieb in den Frischwasserbetrieb oder den Mischbetrieb, erforderlich, da der Puffer-Wassertank vermutlich leer bzw. dessen Füllgradminimum erreicht ist.
- Über- oder Unterschreiten eines vorgegebenen Grenzwerts durch eine rückkondensierte Wassermenge, die durch die Kondensationseinrichtung rückkondensiert und dem Reformer und/oder der Brennstoffzelle zugeführt wird: Es ist möglich, die auskondensierte Wassermenge aller Wasserquellen (Medienströme) zu sammeln und vor dem Einleiten in den geräteinternen Puffer-Wassertank zu messen (Messen der Durchflussmenge). Falls die gemessene Wassermenge unter den vorgegebenen Grenzwert fällt, wird die Umschaltung der Betriebsart in den Frischwasserbetrieb oder den Mischbetrieb veranlasst. Als Grenzwert kann die für einen ordnungsgemäßen Betrieb des Reformer-Brennstoffzellen-Systems notwendige Soll-Wassermenge dienen.
- Über- oder Unterschreiten eines vorgegebenen Grenzwerts durch einen Wasserdruck in der Zuführeinrichtung oder in einer internen Leitung des Reformer-Brennstoffzellen-Systems oder in einer Verbindungsleitung zwischen dem internen Puffer-Wassertank und dem Reformer und/oder der Brennstoffzelle: Über eine Druckmessung in der Zuführeinrichtung (Wasserzuführungsleitung zum Reformersystem und/oder der Brennstoffzelle) bzw. der Verbindungsleitung kann auf eine mangelnde Prozesswasserversorgung rückgeschlossen werden. Ein zu niedriger Wasserdruck kann als Indiz dafür gewertet werden, dass der Puffer-Wassertank leer ist bzw. sein Füllgradminimum erreicht hat.
- Über- oder Unterschreiten eines vorgegebenen Grenzwerts durch eine Zusammensetzung von Reformatgas, das durch den Reformer erzeugt und der Brennstoffzelle zugeführt wird: Grundsätzlich ist es auch möglich, im Betrieb des Reformer-Brennstoffzellen-Systems aus der aktuellen Zusammensetzung des Reformatgases Rückschlüsse auf eine unzureichende Prozesswasserversorgung zu ziehen. Die Zudosierung von Wasser wird bei der Reformierung von Kohlenwasserstoffen über das Verhältnis von Wasserdampf zu Kohlenstoff (S/C-Verhältnis) geregelt. Sollte die benötigte Prozesswassermenge nicht mehr ausreichend zur Verfügung stehen, verringert sich das S/C-Verhältnis, wodurch sich der CO-Gehalt im Reformatgas erhöht. Über eine geeignete CO-Sensorik und mit Hilfe von in der Steuerung hinterlegten Betriebskennfeldern ist ein Rückschluss auf die dem System aktuell zugeführte Prozesswassermenge und einen damit verbundenen Wassermangel möglich, so dass der Umschaltvorgang ausgelöst wird.

Ausgangspunkt der obigen Betrachtungen ist ein regulärer Betrieb des Reformer-Brennstoffzellen-Systems in der Betriebsart "Kondensationsbetrieb", die in Abhängigkeit von den ausgewerteten Kriterien in den Frischwasserbetrieb oder den Mischbetrieb gewechselt werden kann. Ebenso kann aber auch bei Vorliegen eines Kriteriums ein Wechsel vom Mischbetrieb in den Frischwasserbetrieb veranlasst werden.

Selbstverständlich ist ebenso ein Wechsel der Betriebsarten in umgekehrter Richtung, also z.B. vom Mischbetrieb in den Kondensationsbetrieb möglich, wenn sich eines der oben genannten Kriterien wieder in der umgekehrten Richtung verändert, also z.B. normalisiert hat.

Die genannten Kriterien können einzeln oder auch in Kombination genutzt werden, um den Umschaltvorgang bei der Betriebsart der Prozesswasserversorgung zu bewerkstelligen.

Zum Erfassen der Kriterien kann es erforderlich sein, die Umgebungstemperatur, den Druck in der geräteinternen Zuführungsleitung oder den Füllstand des Puffer-Wassertanks zu messen, wozu geeignete Messeinrichtungen vorzusehen sind. Weiterhin können die systeminternen zu- oder abgeführten Wassermengen oder die Reformatgasqualität überwacht werden.

Die genannten Kriterien bzw. Messgrößen für den Umschaltvorgang können auch in Kombination genutzt werden, um eine "vorausschauende" Regelung der Prozesswasserversorgung sicherzustellen. Z.B. ist es möglich, permanent einen systeminternen Vergleich von Input (- zum Reformersystem zugeführtes Wasser) und Output (- kondensiertes Wasser) in Kombination mit der aktuellen Umgebungstemperatur und dem Volumen des internen Puffer-Wassertanks durchzuführen und zu überwachen.

Alternativ bzw. ergänzend zur Umschaltung der Prozesswasserversorgung kann eine solche vorausschauende Regelung auch für eine Leistungsregelung der Kondensationseinrichtung und/oder zur Regelung anderer systeminterner Parameter, welche die Prozesswassererzeugung des Systems beeinflussen (wie z.B. die Leistungsabgabe des Reformer-Brennstoffzellen-Systems sowie eine Reduzierung oder Erhöhung der Kathodenluftzufuhr der Brennstoffzelle), genutzt werden.

Es kann eine Temperaturerfassungseinrichtung vorgesehen sein, zum Erfassen der Umgebungstemperatur, wobei durch die Betriebsarten-Umschalteinrichtung ein Umschalten zwischen den Betriebsarten in Abhängigkeit von der erfassten Umgebungstemperatur bewirkt werden kann. Es hat sich herausgestellt, dass die Wirksamkeit der Kondensationseinrichtung insbesondere bei höheren Arbeits- bzw. Umgebungstemperaturen abnimmt, weil ein erforderlicher Temperaturgradient zwischen dem zu kondensierenden Medium und dem Kühlmedium nicht mehr erzielt werden kann. Wenn somit eine entsprechend erhöhte Umgebungstemperatur (auch möglich: Umgebungstemperatur des Freizeitmobils) festgestellt wird, kann davon ausgegangen werden, dass das von der Kondensationseinrichtung rückgewonnene Wasser nicht mehr ausreicht, um den Betrieb des Reformer-Brennstoffzellen-Systems ordnungsgemäß fortzuführen. In diesem Fall bewirkt die Betriebsarten-Umschalteinrichtung, dass zusätzlich oder ausschließlich Prozesswasser aus dem Frischwasservorrat zugeführt wird.

Die in der Kondensationseinrichtung entstehende Wärme kann in dem Reformer-Brennstoffzellen-System auf mehrere Arten benutzt werden. So kann die Wärme zur Vergleichmäßigung und/oder Aufrechterhaltung der Betriebstemperaturen von Komponenten der Prozesswasserversorgung benutzt werden. Ebenso können mit Hilfe der Wärme die Betriebstemperaturen der Brennstoffzelle des Reformer-Brennstoffzellen-Systems vergleichmäßigt bzw. aufrechterhalten werden. Außerdem kann die Wärme zum Vorwärmen von Medienströmen für den Reformer und/oder die Brennstoffzelle genutzt werden.

Das Prozesswasserversorgungssystem kann - wie beschrieben - besonders vorteilhaft in einem Freizeitmobil eingesetzt werden, das mit einem Reformer-Brennstoffzellen-System, z.B. zur Bordstromversorgung, ausgestattet ist.

Weiterhin wird ein den Betrieb des Prozesswasserversorgungssystems ermöglichendes Verfahren angegeben. Demnach ist ein Frischwasservorrat in einem Wassertank bereit zu stellen, zum Versorgen der Sanitärinstallationen in dem Freizeitmobil mit Frisch- und Brauchwasser. Bedarfsweise, also insbesondere im Betrieb des Reformer-Brennstoffzellen-Systems, kann das Wasser aus dem Wassertank auch als Prozesswasser zu dem Reformer-Brennstoffzellen-System zugeführt werden.

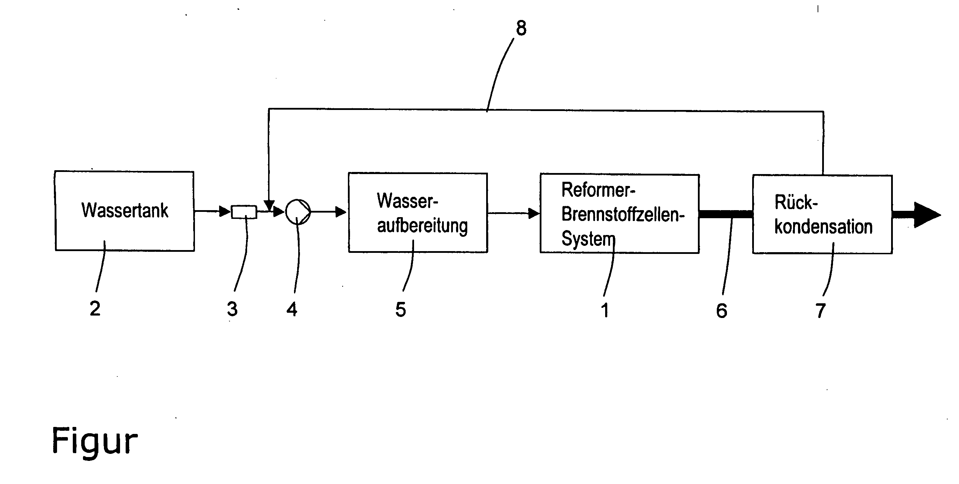

Diese und weitere Vorteile und Merkmale der Erfindung werden nachfolgend anhand eines Beispiels unter Zuhilfenahme der Figur erläutert. Die **einzige Figur** zeigt schematisch ein Prozesswasserversorgungssystem für ein Reformer-Brennstoffzellen-System.

Die Figur zeigt ein nur schematisch dargestelltes Reformer-Brennstoffzellen-System 1, das in bekannter Weise aufgebaut ist. In der Beschreibungseinleitung oben wurden bereits verschiedene Arten von bekannten Reformern und Brennstoffzellen beschrieben. Daher soll an dieser Stelle nicht mehr im Einzelnen auf den Aufbau des Reformer-Brennstoffzellen-Systems 1 eingegangen werden.

Dem Reformer-Brennstoffzellen-System 1 wird ein kohlenwasserstoffhaltiges Fluid (z.B. auch Alkohol) als Brennstoff zugeführt, was jedoch in der Figur nicht dargestellt ist.

Die Figur beschränkt sich daher auf die Darstellung der Prozesswasserversorgung.

Zu diesem Zweck ist ein als Frischwasservorrat dienender Wassertank 2 vorgesehen, in dem Frisch- bzw. Brauchwasser gelagert wird. Bei dem Wassertank 2 kann es sich insbesondere um einen standardmäßig in Freizeitmobilen (Reisemobile, Caravans, Boote, Yachten) vorhandenen Wassertank handeln, der in dem Freizeitmobil zur Wasserversorgung der sanitären Einrichtungen dient. Dieses Wasser wird jetzt außerdem dazu benutzt, das Reformer-Brennstoffzellen-System 1 mit einer ausreichenden Menge an Prozesswasser zu versorgen.

Stromab von dem Wassertank 2 ist eine Rückstromsperre 3 vorgesehen, mit der sichergestellt wird, dass kein Wasser mehr in den Wassertank 2 zurückfließen kann, nachdem es den Wassertank 2 verlassen hat.

Anschließend an die Rückstromsperre 3 ist eine Pumpe 4 vorgesehen, mit der das Wasser aus dem Wassertank 2 zu dem Reformer-Brennstoffzellen-System 1 gefördert wird. Die Pumpe 4 kann bedarfsweise durch eine nicht dargestellte Steuerung immer dann aktiviert werden, wenn Prozesswasser für den Reformer oder die Brennstoffzelle erforderlich ist.

Optional kann nach der Pumpe 4 eine Wasseraufbereitungsvorrichtung 5 vorgesehen sein, die für eine ausreichende Wasserqualität und -reinheit sorgt. Verschiedene Möglichkeiten der Wasseraufbereitung wurden auch bereits oben beschrieben. Sofern jedoch sichergestellt ist, dass das Wasser aus dem Wassertank 2 eine ausreichende Qualität aufweist, kann unter Umständen auf die Wasseraufbereitungsvorrichtung 5 verzichtet werden. Allerdings muss sichergestellt sein, dass keinesfalls Wasser mit Verunreinigungen in das Reformer-Brennstoffzellen-System 1 gelangen und dort größere Schäden verursachen kann.

Der bisher beschriebene Aufbau ermöglicht es, das Prozesswasser ausschließlich aus dem Wassertank 2 zur Verfügung zu stellen und damit den Betrieb des Reformer-Brennstoffzellen-Systems 1 aufrechtzuerhalten.

Bei einer Variante bzw. zusätzlichen Option wird Wasser aus den Medienströmen gewonnen, die das Reformer-Brennstoffzellen-System 1, insbesondere die Brennstoffzelle verlassen. Bei diesen Medienströmen kann es sich um Anodenabgas handeln, das aus einem Anodenreaktionsraum der Brennstoffzelle strömt. Ebenso kann Kathodenabluft aus einem an den Anodenreaktionsraum angrenzenden Kathodenreaktionsraum der Brennstoffzelle genutzt werden. Weiterhin ist es möglich, das Abgas von einem oder mehreren Brennern zu nutzen, die zum Starten oder zum Aufrechterhalten des Betriebs des Reformer-Brennstoffzellen-Systems erforderlich sind.

Alle diese Medienströme enthalten üblicherweise Wasserdampf, der entweder mit dem jeweiligen Medienstrom an die Umgebung abgeführt oder durch Kondensation rückgewonnen und als Wasser wieder verwertet werden kann. Die Abgasmedienströme sind in der Figur zusammenfassend als Pfeil 6 dargestellt.

Zur Rückgewinnung des Wassers ist optional eine Kondensationseinrichtung 7 vorgesehen, durch die einer oder mehrere bzw. gar sämtliche Abgasmedienströme 6 geführt werden. Auf diese Weise kann das Wasser aus den Abgasmedienströmen 6 rückgewonnen werden und über eine Rückführung 8 stromauf von dem Reformer-Brennstoffzellen-System 1 als Prozesswasser zur Verfügung gestellt werden.

Die Rückführung 8 ist in der Figur derart eingezeichnet, dass sie das Prozesswasser stromauf von der Pumpe 4 in die Zuführung einspeist. Auf diese Weise wird das rückgewonnene Wasser auch in der Wasseraufbereitungsvorrichtung 5 gereinigt. Ebenso ist es aber auch möglich, das rückgeführte Wasser direkt an das Reformer-Brennstoffzellen-System 1 zu leiten. Weiterhin ist es auch möglich, das Wasser in einem nicht dargestellten Zwischentank zwischenzuspeichern.

## Patentansprüche

1. Freizeitfahrzeug mit
- einem Reformer-Brennstoffzellen-System (1) für eine Bordstromversorgung:
- einem Prozesswasserversorgungssystem für das Reformer-Brennstoffzellen-System (1),
- einem Frischwasservorrat (2) zum Bevorraten von als Prozesswasser für das Reformer-Brennstoffzellen-System (1) dienendem Frischwasser, wobei das Frischwasser ein Wasser ist, das nicht durch Kondensation aus einem Prozess des Reformer-Brennstoffzellensystems (1) gewonnen wurde;
- einer Zuführeinrichtung (3, 4, 5) zum Zuführen des Prozesswassers zu dem Reformer-Brennstoffzellen-System (1): und mit
- einem Wassertank (2), der gleichzeitig als Wassertank des Freizeitfahrzeugs dient;
wobei
- der Frischwasservorrat in dem Wassertank (2) des Freizeitfahrzeug gelagert ist;
- der Wassertank (2) mit der Zuführeinrichtung (3, 4, 5) sowie mit Sanitärinstallationen in dem Freizeitfahrzeug verbunden ist, derart, dass das in dem Wassertank (2) gelagerte Wasser sowohl als Prozesswasser als auch als Frisch- und Brauchwasser für die Sanitärinstallationen nutzbar ist;
- eine Kondensationseinrichtung (7) vorgesehen ist, zum Rückkondensieren von Wasser, das in wenigstens einem der das Reformer-Brennstoffzellen-System (1) verlassenden Fluidströme (6) enthalten ist; und wobei
- eine Betriebsarten-Umschalteinrichtung vorgesehen ist, zum Umschalten zwischen wenigstens zwei Betriebsarten der folgenden drei Betriebsarten:
+ Versorgen des Reformer-Brennstoffzellen-Systems (1) mit Prozesswasser ausschließlich aus dem Frischwasservorrat (2);
+ Versorgen des Reformer-Brennstoffzellen-Systems (1) mit Prozesswasser ausschließlich von der Kondensationseinrichtung (7);
+ Versorgen des Reformer-Brennstoffzellen-Systems (1) mit Prozesswasser gleichzeitig sowohl aus dem Frischwasservorrat (2) als auch von der Kondensationseinrichtung (7).

2. Freizeitfahrzeug nach Anspruch 1, **dadurch gekennzeichnet, dass** die Zuführeinrichtung (3, 4, 5) mit einem Reformer und/oder einer Brennstoffzelle des Reformer-Brennstoffzellen-Systems (1) verbunden ist, zum Zuführen des Prozesswassers zu dem Reformer bzw. zu der Brennstoffzelle.

3. Freizeitfahrzeug nach einem der vorstehenden Ansprüche, **dadurch gekennzeichnet, dass** der Frischwasservorrat teilweise in einem Trinkwasser-Leitungssystem gelagert ist.

4. Freizeitfahrzeug nach einem der vorstehenden Ansprüche, **dadurch gekennzeichnet, dass** in der Zuführeinrichtung eine Pumpeinrichtung (4) vorgesehen ist, zum Fördern des Wassers aus dem Frischwasservorrat (2) zu dem Reformer-Brennstoffzellen-System (1).

5. Freizeitfahrzeug nach einem der vorstehenden Ansprüche, **dadurch gekennzeichnet, dass** in der Zuführeinrichtung eine Wasseraufbereitungsvorrichtung (5) vorgesehen ist.

6. Freizeitfahrzeug nach einem der vorstehenden Ansprüche, **dadurch gekennzeichnet, dass** in der Zuführeinrichtung stromauf von der Pumpeinrichtung (4) eine Rückstromsperre (3) vorgesehen ist.

7. Freizeitfahrzeug nach einem der vorstehenden Ansprüche, **dadurch gekennzeichnet, dass** die Kondensationseinrichtung (7) mit dem Reformer und/oder der Brennstoffzelle verbunden ist, zum Zuführen des rückkondensierten Wassers als Prozesswasser zu dem Reformer und/oder der Brennstoffzelle.

8. Freizeitfahrzeug nach einem der vorstehenden Ansprüche, **dadurch gekennzeichnet, dass**
- die Kondensationseinrichtung (7) mit der Zuführeinrichtung (3, 4, 5) verbunden ist; und dass
- die Wasseraufbereitungsvorrichtung (5) stromab von der Kondensationseinrichtung (7) vorgesehen ist.

9. Freizeitfahrzeug nach einem der vorstehenden Ansprüche, **dadurch gekennzeichnet, dass** wenigstens einer der folgenden Fluidströme zu der Kondensationseinrichtung (7) führbar ist:
- Anodenabgas aus einem Anodenreaktionsraum der Brennstoffzelle;
- Kathodenabluft aus einem Kathodenreaktionsraum der Brennstoffzelle;
- Abgas von einem Brenner, der zum Erwärmen von Teilen des Reformer-Brennstoffzellen-Systems, zum Erwärmen von Medienströmen zu dem Reformer-Brennstoffzellen-System oder zum Bereitstellen von Prozesswärme dient;
- Abgas von einem Brenner, der zum Verwerten von Anodenabgas dient.

10. Freizeitfahrzeug nach einem der vorstehenden Ansprüche, **dadurch gekennzeichnet, dass** durch die Betriebsarten-Umschalteinrichtung ein Umschalten zwischen den Betriebsarten in Abhängigkeit von wenigstens einem der folgenden Kriterien bewirkbar ist:
- Über- oder Unterschreiten eines vorgegebenen Grenzwerts durch die Umgebungstemperatur;
- Über- oder Unterschreiten eines vorgegebenen Grenzwerts durch einen Füllstand in einem internen Puffer-Wassertank des Reformer-Brennstoffzellen-Systems (1);
- Über- oder Unterschreiten eines vorgegebenen Grenzwerts durch eine Durchflussmenge an Wasser, das dem Reformer und/oder der Brennstoffzelle des Reformer-Brennstoffzellen-Systems (1) zugeführt wird;
- Über- oder Unterschreiten eines vorgegebenen Grenzwerts durch eine rückkondensierte Wassermenge, die durch die Kondensationseinrichtung (7) rückkondensiert und dem Reformer und/oder der Brennstoffzelle zugeführt wird;
- Über- oder Unterschreiten eines vorgegebenen Grenzwerts durch einen Wasserdruck in der Zuführeinrichtung (3, 4, 5) oder in einer internen Leitung des Reformer-Brennstoffzellen-Systems (1) oder in einer Verbindungsleitung zwischen dem internen Puffer-Wassertank und dem Reformer und/oder der Brennstoffzelle;
- Über- oder Unterschreiten eines vorgegebenen Grenzwerts durch eine Zusammensetzung von Reformatgas, das durch den Reformer erzeugt und der Brennstoffzelle zugeführt wird.

11. Freizeitfahrzeug nach einem der vorstehenden Ansprüche, **dadurch gekennzeichnet, dass**
- eine Temperaturerfassungseinrichtung vorgesehen ist, zum Erfassen der Umgebungstemperatur; und dass
- durch die Betriebsarten-Umschalteinrichtung ein Umschalten zwischen den Betriebsarten in Abhängigkeit von der erfassten Umgebungstemperatur bewirkbar ist.

12. Freizeitfahrzeug nach einem der vorstehenden Ansprüche, **dadurch gekennzeichnet, dass** das Reformer-Brennstoffzellensystem aufweist:
- einen Reformer zum Umwandeln eines kohlenwasserstoffhaltigen Fluids in ein wasserstoffhaltiges Gas; und dass
- wenigstens eine Brennstoffzelle zum Umwandeln des in dem wasserstoffhaltigen Gas enthaltenen Wasserstoffs zusammen mit Sauerstoff in Strom, Wärme und einen Wasser enthaltenden Fluidstrom, wobei
- der Fluidstrom zu der Kondensationseinrichtung (7) führbar ist.

13. Freizeitfahrzeug nach einem der vorstehenden Ansprüche, **dadurch gekennzeichnet, dass** die in der Kondensationseinrichtung (7) entstehende Wärme in dem Reformer-Brennstoffzellen-System (1) nutzbar ist.

14. Verfahren zur Prozesswasserversorgung für ein Reformer-Brennstoffzellen-System (1) in einem Freizeitfahrzeug, mit den Schritten:
- Bereitstellen eines Frischwasservorrats in einem Wassertank (2) des Freizeitfahrzeugs, wobei das Frischwasser in dem Frischwasservorrat ein Wasser ist, das nicht durch Kondensation aus einem Prozess des Reformer-Brennstoffzellensystems (1) gewonnen wurde;
- Versorgen von Sanitärinstallationen in dem Freizeitfahrzeug mit Frisch- und Brauchwasser aus dem Wassertank (2);
- bedarfsweise Zuführen von Wasser aus dem Wassertank (2) als Prozesswasser zu dem Reformer-Brennstoffzellen-System (1);
- Rückkondensieren von Wasser in einer Kondensationseinrichtung (7), wobei das Wasser in wenigstens einem der das Reformer-Brennstoffzellen-System (1) verlassenden Fluidströme (6) enthalten ist:
- Bereitstellen einer Umschaltmöglichkeit zum Umschalten zwischen wenigstens zwei Betriebsarten der folgenden drei Betriebsarten:
+ Versorgen des Reformer-Brennstoffzellen-Systems (1) mit Prozesswasser ausschließlich aus dem Wassertank (2);
+ Versorgen des Reformer-Brennstoffzellen-Systems (1) mit Prozesswasser ausschließlich von der Kondensationseinrichtung (7);
+ Versorgen des Reformer-Brennstoffzellen-Systems (1) mit Prozesswasser gleichzeitig sowohl aus dem Wassertank (2) als auch von der Kondensationseinrichtung (7).

## Claims

1. Leisure vehicle with
- a reformer-fuel cell system (1) for an on-board supply;
- a process water supply system for the reformer-fuel cell system (1),
- a fresh water reservoir (2) for storage of fresh water acting as process water for the reformer-fuel cell system (1), wherein the fresh water is a water that has not been recovered by condensation from a process of the reformer-fuel cell system (1);
- a supply facility (3, 4, 5) for supplying the process water to the reformer-fuel cell system (1); and with
- a water tank (2), which also acts at the same time as water tank of the leisure vehicle;
wherein the fresh water reservoir is stored in the water tank (2) of the leisure vehicle;
- the water tank (2) is connected to the supply facility (3, 4, 5) and to sanitary installations in the leisure vehicle, so that the water stored in the water tank (2) can be used both as process water and as fresh water and service water for the sanitary installations;
- a condensation device (7) is provided for re-condensation of water contained in at least one of the fluid streams (6) leaving the reformer-fuel cell system (1); and wherein
- an operating mode changeover facility is provided, for switching between at least two operating modes of the following three operating modes:
+ supply of the reformer-fuel cell system (1) with process water exclusively from the fresh water reservoir (2);
+ supply of the reformer-fuel cell system (1) with process water exclusively from the condensation device (7);
+ supply of the reformer-fuel cell system (1) with process water simultaneously from both the fresh water reservoir (2) and the condensation device (7).

2. Leisure vehicle in accordance with claim 1, **characterised in that** the supply facility (3, 4, 5) is connected to a reformer and/or a fuel cell of the reformer-fuel cell system, for supplying the process water to the reformer or to the fuel cell.

3. Leisure vehicle in accordance with one of the preceding claims, **characterised in that** the fresh water is partially stored in a drinking water piping system.

4. Leisure vehicle in accordance with one of the preceding claims, **characterised in that** a pumping means (4) is provided in the supply facility, to convey the water from the fresh water reservoir (2) to the reformer-fuel cell system (1).

5. Leisure vehicle in accordance with one of the preceding claims, **characterised in that** a water treatment device (5) is provided in the supply facility.

6. Leisure vehicle in accordance with one of the preceding claims, **characterised in that** a non-return valve (3) is provided in the supply facility upstream from the pump means (4).

7. Leisure vehicle in accordance with one of the preceding claims, **characterised in that** the condensation device (7) is connected to the reformer and/or the fuel cell, for supplying the re-condensed water as process water to the reformer and/or the fuel cell.

8. Leisure vehicle in accordance with one of the preceding claims, **characterised in that**
- the condensation device (7) is connected to the supply facility (3, 4, 5); and that
- the water treatment device (5) is provided downstream from the condensation device (7).

9. Leisure vehicle in accordance with one of the preceding claims, **characterised in that** at least one of the following fluid streams can be passed to the condensation device (7):
- anode exhaust gas from an anode reaction chamber of the fuel cell;
- cathode exhaust gas from a cathode reaction chamber of the fuel cell;
- exhaust gas from a burner which serves to heat parts of the reformer-fuel cell system, for heating media flows to the reformer-fuel cell system or for providing process heat;
- exhaust gas from a burner which serves to utilise anode exhaust gas.

10. Leisure vehicle in accordance with one of the preceding claims, **characterised in that** a switch between the operating modes of at least one of the following can be effected through the operating mode changeover device depending on at least one of the following criteria:
- ambient temperature exceeding or falling below a predetermined limit value;
- filling level in an internal buffer water tank of the reformer-fuel cell system (1) exceeding or falling below a predetermined limit value;
- flow rate of water that is supplied to the reformer and/or the fuel cell of the reformer-fuel cell system (1) exceeding or falling below a predetermined limit value;
- quantity of re-condensed water which is re-condensed by the condensation device and supplied to the reformer and/or the fuel cell exceeding or falling below a predetermined limit value;
- a water pressure in the supply facility (3, 4, 5) or in an internal pipeline of the reformer-fuel cell system (1) or in a connecting pipe between the internal buffer tank and the reformer and/or the fuel cell exceeding or falling below a predetermined limit value;
- the composition of reformate gas that is produced by the reformer and is supplied to the fuel cell exceeding or falling below a predetermined limit value.

11. Leisure vehicle in accordance with one of the preceding claims, **characterised in that**
- a temperature recording device is provided for recording the ambient temperature; and that
- a switch between the operating modes can be effected by the operating mode changeover device depending on the recorded ambient temperature.

12. Leisure vehicle in accordance with one of the preceding claims, **characterised in that** the reformer fuel cell comprises:
- a reformer for transforming a hydrocarbon-containing fluid into a hydrogen-containing gas; and that
- at least one fuel cell for transforming the hydrogen contained in the hydrogen-containing gas together with oxygen into electricity, heat and a fluid stream containing water, wherein
- the fluid stream can be passed to the condensation device (7).

13. Leisure vehicle in accordance with one of the preceding claims, **characterised in that** the heat generated in the condensation device (7) can be utilised in the reformer-fuel cell system (1).

14. Method for supplying the process water for a reformer-fuel cell system (1) in a leisure vehicle, with the steps:
- provision of a fresh water reservoir in a water tank (2) of the leisure vehicle, wherein the fresh water is water in the fresh water reservoir is a water that has not been recovered by condensation from a process of the reformer-fuel cell system (1);
- supply of sanitary installations in the leisure vehicle with fresh water and service water from the water tank (2);
- where required, supply of water from the water tank (2) as process water to the reformer-fuel cell system (1);
- re-condensation of water in a condensation device (7), wherein the water is contained in at least one of the fluid streams (6) leaving the reformer-fuel cell system (1);
- Provision of a changeover facility for switching between at least two operating modes of the following three operating modes:
+ supply of the reformer-fuel cell system (1) with process water exclusively from the fresh water reservoir (2);
+ supply of the reformer-fuel cell system (1) with process water exclusively from the condensation device (7);
+ supply of the reformer-fuel cell system (1) with process water simultaneously from both the fresh water reservoir (2) and the condensation device (7).

## Revendications

1. Véhicule de loisir avec
- un système de piles à combustible à reformeur (1) pour une alimentation électrique de bord ;
- un système d'alimentation en eau de traitement pour le système de piles à combustible à reformeur (1),
- une réserve d'eau fraîche (2) pour l'approvisionnement en eau fraîche servant d'eau de traitement pour le système de piles à combustible à reformeur (1), étant précisé que l'eau fraîche est une eau qui n'a pas été obtenue par condensation à partir d'un traitement du système de piles à combustible à reformeur (1) ;
- un dispositif d'amenée (3, 4, 5) pour amener l'eau de traitement dans le système de piles à combustible à reformeur (1) ; et avec
- un réservoir d'eau (2) qui sert en même temps de réservoir d'eau du véhicule de loisir ;
étant précisé
- que la réserve d'eau fraîche est stockée dans le réservoir d'eau (2) du véhicule de loisir ;
- que le réservoir d'eau (2) est relié au dispositif d'amenée (3, 4, 5) et à des installations sanitaires prévues dans le véhicule de loisir, de telle sorte que l'eau stockée dans le réservoir d'eau (2) soit utilisable aussi bien comme eau de traitement que comme eau fraîche et comme eau sanitaire pour les installations sanitaires ;
- qu'il est prévu un dispositif de condensation (7) pour recondenser l'eau contenue dans l'un au moins des courants de fluide (6) qui sortent du système de piles à combustible à reformeur (1) ; et
- qu'il est prévu un sélecteur de mode de fonctionnement pour le passage entre au moins deux des trois modes de fonctionnement suivants :
+ alimentation du système de piles à combustible à reformeur (1) en eau de traitement uniquement à partir de la réserve d'eau fraîche (2) ;
+ alimentation du système de piles à combustible à reformeur (1) en eau de traitement uniquement à partir du dispositif de condensation (7) ;
+ alimentation du système de piles à combustible à reformeur (1) en eau de traitement en même temps à partir de la réserve d'eau fraîche (2) et à partir du dispositif de condensation (7).

2. Véhicule de loisir selon la revendication 1, **caractérisé en ce que** le dispositif d'amenée (3, 4, 5) est relié à un reformeur et/ou à une pile à combustible du système de piles à combustible à reformeur (1) afin d'amener l'eau de traitement dans le reformeur ou dans la pile à combustible.

3. Véhicule de loisir selon l'une des revendications précédentes, **caractérisé en ce que** la réserve d'eau fraîche est stockée partiellement dans un système de conduite d'eau potable.

4. Véhicule de loisir selon l'une des revendications précédentes, **caractérisé en ce qu'**il est prévu dans le dispositif d'amenée un dispositif à pompe (4) pour acheminer l'eau de la réserve d'eau fraîche (2) jusqu'au système de piles à combustible à reformeur (1).

5. Véhicule de loisir selon l'une des revendications précédentes, **caractérisé en ce qu'**il est prévu dans le dispositif d'amenée un dispositif de traitement de l'eau (5).

6. Véhicule de loisir selon l'une des revendications précédentes, **caractérisé en ce qu'**il est prévu dans le dispositif d'alimentation, en amont du dispositif à pompe (4), un clapet antiretour (3).

7. Véhicule de loisir selon l'une des revendications précédentes, **caractérisé en ce que** le dispositif de condensation (7) est relié au reformeur et/ou à la pile à combustible afin d'amener l'eau recondensée, comme eau de traitement, dans le reformeur et/ou dans la pile à combustible.

8. Véhicule de loisir selon l'une des revendications précédentes, **caractérisé en ce que**
- le dispositif de condensation (7) est relié au dispositif d'amenée (3, 4, 5) ; et **en ce que**
- le dispositif de traitement de l'eau (5) est prévu en aval du dispositif de condensation (7).

9. Véhicule de loisir selon l'une des revendications précédentes, **caractérisé en ce que** l'un au moins des courants de fluide est apte à être amené dans le dispositif de condensation (7) :
- gaz d'échappement anodiques provenant d'un espace de réaction anodique de la pile à combustible ;
- air de sortie de cathode provenant d'un espace de réaction cathodique de la pile à combustible ;
- gaz d'échappement d'un brûleur qui sert à chauffer des éléments du système de piles à combustible à reformeur, à chauffer des courants de fluide vers le système de piles à combustible à reformeur (1) ou à fournir de la chaleur de traitement ;
- gaz d'échappement d'un brûleur qui sert à recycler les gaz d'échappement anodiques.

10. Véhicule de loisir selon l'une des revendications précédentes, **caractérisé en ce que** grâce au sélecteur de mode de fonctionnement, un passage entre les modes de fonctionnement est apte à être provoqué en fonction de l'un au moins des critères suivants :
- la température ambiante devient supérieure ou inférieure à une valeur limite prédéfinie ;
- un niveau de remplissage dans un réservoir d'eau tampon interne du système de piles à combustible à reformeur (1) devient supérieur ou inférieur à une valeur limite prédéfinie ;
- un débit d'eau amenée dans le reformeur et/ou dans la piste à combustible du système de piles à combustible à reformeur (1) devient supérieur ou inférieur à une valeur limite prédéfinie ;
- une quantité d'eau recondensée par le dispositif de condensation (7) et amenée dans le reformeur et/ou dans la pile à combustible devient supérieure ou inférieure à une valeur limite prédéfinie ;
- une pression d'eau dans le dispositif d'amenée (3, 4, 5) ou dans une conduite interne du système de piles à combustible à reformeur (1) ou dans une conduite de raccordement entre le réservoir d'eau tampon interne et le reformeur et/ou la pile à combustible devient supérieure ou inférieure à une valeur limite prédéfinie ;
- une composition de gaz de reformage produit par le reformeur et amené dans la pile à combustible devient supérieure ou inférieure à une valeur limite prédéfinie.

11. Véhicule de loisir selon l'une des revendications précédentes, **caractérisé**
- **en ce qu'**il est prévu un dispositif de mesure de température pour mesurer la température ambiante ; et
- **en ce que** grâce au sélecteur de mode de fonctionnement, un passage entre les modes de fonctionnement est apte à être provoqué en fonction de la température ambiante mesurée.

12. Véhicule de loisir selon l'une des revendications précédentes, **caractérisé en ce que** le système de piles à combustible à reformeur comporte :
- un reformeur pour transformer un fluide hydrocarburé en un gaz hydrogéné ; et
- au moins une pile à combustible pour transformer l'hydrogène contenu dans le gaz hydrogéné, avec l'azote, en courant, en chaleur et en un courant de fluide contenant de l'eau, étant précisé que
- le courant de fluide est apte à être amené dans le dispositif de condensation (7).

13. Véhicule de loisir selon l'une des revendications précédentes, **caractérisé en ce que** la chaleur qui se forme dans le dispositif de condensation (7) est utilisable dans le système de piles à combustible à reformeur (1).

14. Procédé pour l'alimentation en eau de traitement pour un système de piles à combustible à reformeur (1) dans un véhicule de loisir, avec les étapes suivantes :
- fourniture d'une réserve d'eau fraîche dans un réservoir d'eau (2) du véhicule de loisir, étant précisé que l'eau fraîche contenue dans le réservoir d'eau fraîche est une eau qui n'a pas été obtenue par condensation à partir d'un traitement du système de piles à combustible à reformeur (1) ;
- alimentation d'installations sanitaires prévues dans le véhicule de loisir en eau fraîche et en eau sanitaire à partir du réservoir d'eau (2) ;
- au besoin, amenée d'eau comme eau de traitement dans le système de piles à combustible à reformeur (1), à partir du réservoir d'eau (2) ;
- recondensation de l'eau dans un dispositif de condensation (7), étant précisé que l'eau est contenue dans l'un au moins des courants de fluide (6) qui sortent du système de piles à combustible à reformeur (1) ;
- fourniture d'une possibilité de manoeuvre pour le passage entre au moins deux des trois modes de fonctionnement suivants :
+ alimentation du système de piles à combustible à reformeur (1) en eau de traitement uniquement à partir du réservoir d'eau fraîche (2) ;
+ alimentation du système de piles à combustible à reformeur (1) en eau de traitement uniquement à partir du dispositif de condensation (7) ;
+ alimentation du système de piles à combustible à reformeur (1) en eau de traitement en même temps à partir du réservoir d'eau fraîche (2) et à partir du dispositif de condensation (7).
